(19) Europäisches Patentamt
European Patent Office
Office européen des brevets

(11) **EP 2 361 411 B1**

(12) **FASCICULE DE BREVET EUROPEEN**

(45) Date de publication et mention de la délivrance du brevet:
**10.07.2019 Bulletin 2019/28**

(21) Numéro de dépôt: **09768115.9**

(22) Date de dépôt: **25.11.2009**

(51) Int Cl.:
*G06F 17/15* (2006.01)      *G06F 17/14* (2006.01)
*H04S 1/00* (2006.01)       *H04S 3/00* (2006.01)

(86) Numéro de dépôt international:
**PCT/FR2009/001342**

(87) Numéro de publication internationale:
**WO 2010/061076 (03.06.2010 Gazette 2010/22)**

(54) **PROCÉDÉ DE TRAITEMENT DU SIGNAL AUDIONUMÉRIQUE**

VERFAHREN ZUR VERARBEITUNG EINES DIGITALEN AUDIOSIGNALS

METHOD FOR PROCESSING A DIGITAL AUDIO SIGNAL

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **25.11.2008 FR 0806608**

(43) Date de publication de la demande:
**31.08.2011 Bulletin 2011/35**

(73) Titulaire: **A Volute**
**59491 Villeneuve-d'Ascq (FR)**

(72) Inventeurs:
• **PHAM, Tuyen**
**59000 Lille (FR)**
• **GREFF, Raphaël**
**59120 Loos (FR)**
• **ALLAIS, Paul**
**59000 Lille (FR)**

(74) Mandataire: **Regimbeau**
**20, rue de Chazelles**
**75847 Paris Cedex 17 (FR)**

(56) Documents cités:
**WO-A-2007/110519      US-A1- 2006 140 291**

• **LOPEZ J J ET AL: "PC based real-time multichannel convolver for ambiophonic reproduction" AES 19TH INTERNATIONAL CONFERENCE ON SURROUND SOUND, SCHLOSS ELMAU, GERMANY, 21-24 JUNE 2001, [Online] 2001, XP002554320 Extrait de l'Internet: URL:http://www.aurora-plugins.com/Public/A ES-19/Ambiovolver/Jos%C3%83%C2%A8_Pape rs/0 0037.pdf> [extrait le 2009-11-05]**
• **BRIGHAM E O: "The Fast Fourier Transform and its Applications" 1988, PRENTICE-HALL INC. , XP002554323 * sections 9.3 et 10.3 ***
• **FARINA A ET AL: "Software implementation of an MLS analyzer, with tools for convolution, auralization and inverse filtering" PRE-PRINTS OF THE 103RD AES CONVENTION, NEW YORK, 26-29 SEPTEMBER 1997, [Online] 1997, XP002554321 Extrait de l'Internet: URL:http://pcfarina.eng.unipr.it/Public/Pa pers/097-AES97.PDF> [extrait le 2009-11-05]**
• **MEYER-BAESE U: "Digital Signal Processing with Field Programmable Gate Arrays (Third Edition)" 2007, SPRINGER-VERLAG , XP002554324 * pages 347 à 349 ***
• **PRESS W H ET AL: "Numerical Recipes in C (Second Edition)" 1992, CAMBRIDGE UNIVERSITY PRESS , XP002554325 * pages 510 à 514 * * pages 542 à 544 ***
• **QUE Y P ET AL: "Rendering models for immersive voice communications within distributed virtual environment" IEEE INTERNATIONAL REGION 10 CONFERENCE (TENCON 2005), MELBOURNE, AUSTRALIA, 21-24 NOVEMBER 2005, 2005, XP002554322**

**EP 2 361 411 B1**

**Description**

L'invention concerne un procédé de traitement du signal audionumérique, ainsi qu'un processeur de signal numérique programmé pour la mise en oeuvre du procédé.

L'invention trouvera une application particulière pour des processeurs de signal numérique (DSP) disposant de bibliothèques de calcul de Transformées de Fourier de l'espace des complexes vers l'espace des complexes.

Le domaine de l'invention est celui du traitement du signal audionumérique.

Le calcul d'une Transformée de Fourier d'un signal réel aboutit à une redondance de coefficient. Cette redondance est utilisée par certains algorithmes pour limiter le nombre de calculs et effectuer plus rapidement cette opération. De tels algorithmes sont notamment connus des documents WO-01/33411, US-2002/0083107, US-2006/0140291, ou encore du document "PC based real-time multichannel convolver for ambiophonic reproduction", par J.J. Lopez, AES 19th International Conference on Surround Sound, 21-24 juin 2001, qui décrit un outil logiciel pour la convolution temps-réel multi-canaux. Certains de ces algorithmes nécessitent des bibliothèques de fonction permettant de faire des calculs très rapides de Transformées de Fourier réels en optimisant les calculs suivant les capacités matérielles des machines. Cependant, la plupart des DSP actuels ne possède pas de telles librairies et n'ont que des Transformées de Fourier Rapides (que nous appellerons FFT pour Fast Fourier Transform) pour des nombres complexes, c'est-à-dire de l'espace des complexes vers l'espace des complexes. Les sections 9.3 et 10.3 du livre "The Fast Fourier Transform and its Applications", E.O. Brigham, Prentice-Hall Inc, 1988, décrivent des méthodes de calcul de FFT et de convolution sur des signaux réels en utilisant des FFT complexes.

Le but de la présente invention est de proposer une alternative aux procédés de l'état de la technique permettant de réduire la charge de calcul pour des opérations de filtrage par convolution de Transformées de Fourier Rapides dans le contexte d'un procédé de traitement de signal audionumérique pour réaliser la spatialisation du son.

Un autre but de l'invention est de proposer un tel procédé, particulièrement adapté pour des DSP disposant de bibliothèques de calculs de FFT de l'espace des complexes vers l'espace des complexes.

D'autres buts et avantages de la présente invention apparaîtront au cours de la description qui va suivre, qui n'est donnée qu'à titre indicatif et qui n'a pas pour but de la limiter.

L'invention concerne tout d'abord un procédé de traitement de signal audionumérique pour réaliser une spatialisation du son, ledit procédé étant mis en oeuvre par un processeur de signal numérique (DSP) possédant des bibliothèques de calculs de Transformées de Fourier de l'espace des complexes vers l'espace des complexes, pour le traitement numérique de P signaux d'entrée, P étant un entier supérieur ou égal à 2, pour le filtrage desdits P signaux d'entrée par convolution de Transformées de Fourier Rapides (FFT), échantillonnées, obtenant ainsi Q signaux de sortie, Q étant un entier supérieur ou égal à deux.

Selon l'invention, le procédé comprend au moins les étapes suivantes :

- regrouper lesdits P signaux d'entrée par deux, l'un représentant la partie réelle, l'autre la partie imaginaire d'un nombre complexe, définissant ainsi un ou plusieurs vecteurs d'entrée,
- réaliser le filtrage sur ledit ou lesdits vecteurs d'entrée en passant par l'espace de Fourier, engendrant ainsi un ou plusieurs vecteurs de sortie, complexe, la partie réelle et la partie imaginaire dudit ou de chacun desdits vecteurs sortis représentant respectivement l'un desdits Q signaux de sortie.

Les revendications 1 à 7 définissent l'invention et ses modes de revendications.

L'invention sera mieux comprise à la lecture de la description suivante accompagnée des figures en annexe parmi lesquelles :

- la figure 1 est un diagramme schématique illustrant le filtrage par convolution de Transformées de Fourier Rapides d'un signal d'entrée pour obtenir un signal de sortie, selon un algorithme non optimisé de l'état de la technique (cas une entrée, une sortie),
- la figure 2 illustre le filtrage par convolution de Transformées de Fourier Rapides d'un signal d'entrée pour obtenir deux signaux de sortie, selon un algorithme non optimisé de l'état de la technique (cas une entrée, deux sorties),
- la figure 3 est un diagramme schématique illustrant le filtrage par convolution de Transformées de Fourier Rapides de deux signaux d'entrée pour obtenir deux signaux de sortie selon un algorithme non optimisé de l'état de la technique (cas deux entrées, deux sorties),

- la figure 4 est un diagramme schématique illustrant le procédé de traitement conforme à l'invention, pour le filtrage de deux signaux d'entrée en vue d'obtenir deux signaux de sortie (P=2, Q=2),
- la figure 5 est un diagramme schématique illustrant la généralisation du procédé conforme à l'invention tel qu'illustré à la figure 4 pour le filtrage d'un nombre de signaux P strictement supérieur à 2, entier tel que P = 2 x L avec L un entier (P=2L, Q=2),

- la figure 6 est un diagramme schématique illustrant la généralisation du procédé conforme à l'invention tel qu'illustré à la figure 5 dans lequel P est supérieur ou égal à 2, entier pair tel que P = 2L avec L un entier et Q strictement supérieur à 2 entier pair tel que Q = 2M avec M un entier (P=2L, Q=2M).

Nous commençons tout d'abord par décrire le filtrage par convolution de Transformées de Fourier, non optimisé, selon l'état de la technique, plus particulièrement les cas suivants :

a) un signal d'entrée vers une sortie,
b) un signal d'entrée vers deux sorties,
c) deux signaux d'entrée vers deux signaux de sortie (spatialisation de deux sources sur une sortie stéréo).

**Cas a)** : 1 signal d'entrée $\rightarrow$ 1 signal de sortie (Filtrage numérique)

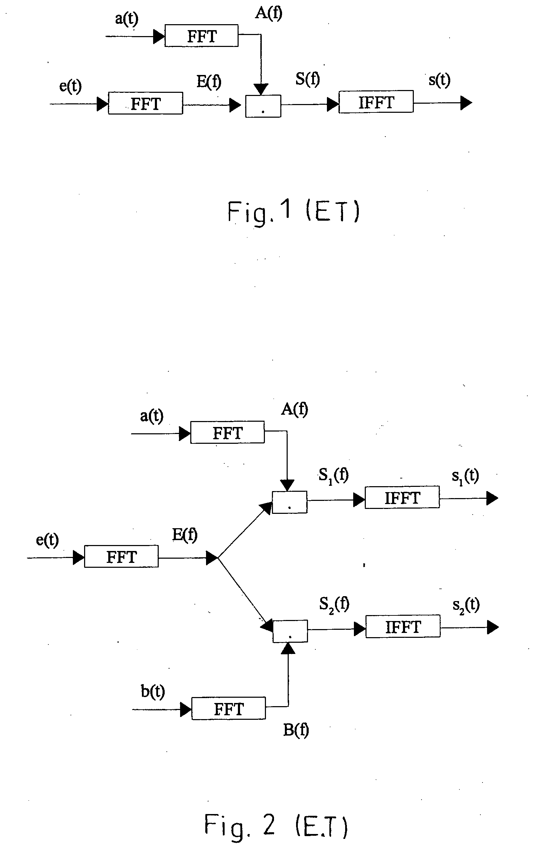

Ce cas est illustré au diagramme de la figure 1. Soit un signal $e(t)$ que l'on souhaite convoluer avec un signal $a(t)$. $a(t)$ est la réponse impulsionnelle à appliquer

soit le filtre $A(f)=FFT[(a(t))]$
soit $E(f) = FFT[e(t)]$

Nous avons donc le signal résultant de sorties :

$$s(t) = e(t) \otimes a(t) = IFFT\,[E(f).A(f)] = IFFT\,[\,FFT\,(e(t)\,).\,FFT(a(t))\,]$$

dans lequel FFT est la transformée de Fourier rapide et IFFT la transformée de Fourier rapide inverse.
On peut utiliser ce filtrage sur une fenêtre de taille N. En utilisant les techniques classiques d'overlap-add ou overlap-save, on peut remplacer $e(t)$ par $e(t)_N$ correspondant aux échantillons pris sur la fenêtre de taille N, et FFT par $FFT_N$ qui est la transformée de Fourier rapide sur N échantillons.
Le temps de calcul dépend pour ce type d'opération essentiellement du nombre de FFT ou de IFFT à calculer.
En prenant comme unité de temps la FFT, et en prenant comme hypothèse simplificatrice que le temps de calcul d'une FFT équivaut à celui d'une IFFT, le temps de calcul est de 3 FFT.

**Cas b)** : 1 signal d'entrée $\rightarrow$ 2 signaux de sortie (Exemple : spatialisation d'une source sur une sortie stéréo).

Ce cas est illustré au diagramme de la figure 2.
Définissons les filtres suivants :

- un filtre direct $a(t)$,
- un filtre indirect $b(t)$,

Les signaux de sortie sont donc $s_1$ et $s_2$ tels que :

$$S_1(f) = FFT\,[\,s_1(t)] = E(f)\,.\,A(f)$$

$$S_2(f) = FFT\,[s_2(t)] = E(f)\,.\,B(f)$$

En prenant comme unité de temps la FFT, le temps de calcul est de 5 FFT.

**Cas c)** : 2 signaux d'entrée $\rightarrow$ 2 signaux de sortie (exemple d'application : spatialisation de deux sources sur une sortie stéréo)

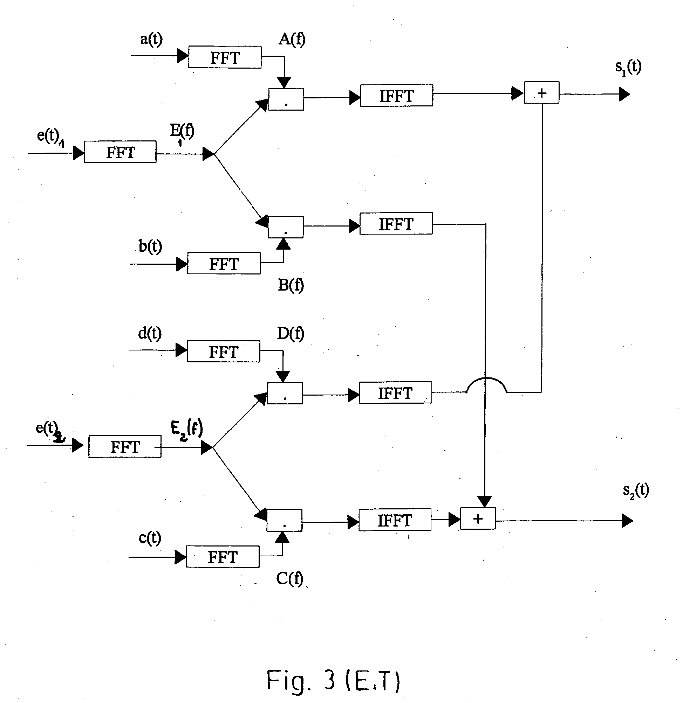

Ce cas est illustré au diagramme de la figure 3.
Soit un signal d'entrée $e_1$ et un signal d'entrée $e_2$.
Définissons les filtres suivants a, b, d, c tels que :

$$\begin{pmatrix} s_1(t) \\ s_2(t) \end{pmatrix} = \begin{pmatrix} a(t) & d(t) \\ b(t) & c(t) \end{pmatrix} \otimes \begin{pmatrix} e_1(t) \\ e_2(t) \end{pmatrix}$$

Les signaux de sortie sont donc $s_1$ et $s_2$ tels que:

$$s_1(t) = IFFT\ [A(f).E_1(f)] + IFFT\ [D(f).E_2(f)]$$

$$s_2(t) = IFFT\ [B(f).E_1(f)] + IFFT\ [C(f).E_2(f)].$$

En prenant comme unité de temps la FFT, le temps de calcul est ici de 10 FFT.

Certains processeurs de signal numérique que nous appelons DSP pour « Digital signal processor », peuvent embarquer une grande quantité de mémoire. Les filtres A(f) , B(f), D(f), C(f) peuvent être alors stockés dans l'espace des phases (encore appelé espace de Fourier ou espace des fréquences), ce qui prend deux fois plus de mémoire sur le DSP que s'ils étaient stockés dans l'espace des temps, à savoir sous leur forme a(t), b(t), d(t), c(t). On économise ainsi 4 FFT. Le temps de calcul peut être alors réduit à 6 FFT.

L'invention concerne un procédé de traitement de signal, audionumérique pour réaliser une spatialisation du son, ledit procédé étant mis en oeuvre par un processeur de signal numérique (DSP) possédant des bibliothèques de calcul de transformées de Fourier de l'espace des complexes vers l'espace des complexes, pour le traitement numérique de P signaux d'entrée, P étant un entier supérieur ou égal à 2, pour le filtrage desdits P signaux d'entrée par convolution de transformées de Fourier rapides (FFT) échantillonnées, obtenant ainsi Q signaux de sortie, Q étant un entier supérieur ou égal à 2.

Selon l'invention le procédé comprend au moins les étapes suivantes :

- regrouper lesdits P signaux d'entrée par deux, l'un représentant la partie réelle, l'autre la partie imaginaire d'un nombre complexe, définissant ainsi un ou plusieurs vecteurs d'entrée,
- réaliser le filtrage sur ledit ou lesdits vecteurs d'entrée en passant par l'espace de Fourier, engendrant ainsi un ou plusieurs vecteurs de sortie, complexes, la partie réelle et la partie imaginaire dudit ou de chacun desdits vecteurs de sortie représentant respectivement l'un desdits Q signaux de sortie.

Ledit ou chacun desdits vecteurs de sortie est obtenu de la manière suivante :

(1) on applique un opérateur de filtrage sur ledit vecteur d'entrée, dans le cas où P=2, donnant ainsi un résultat ou le cas échéant, selon une autre alternative, dans le cas P>2, sur chacun desdits vecteurs d'entrée, donnant ainsi plusieurs résultats intermédiaires,

(2) dans le cas où P>2, on somme lesdits résultats intermédiaires obtenus à l'étape précédente dans l'espace de Fourier.

(3) on fait subir au résultat de l'étape (1) ou (2) une transformée de Fourier rapide inverse, obtenant ainsi ledit vecteur de sortie.

Divers modes de réalisation de l'invention seront décrits par la suite, et plus particulièrement les cas suivants :

1) 2 signaux d'entrée $\rightarrow$ 2 signaux de sortie (P=2, Q=2),
2) 2.L signaux d'entrée $\rightarrow$ 2 signaux de sortie (P=2.L, Q=2),
3) 2.L signaux d'entrée $\rightarrow$ 2.M signaux de sortie (P=2.L, Q=2.M),
4) 2.L+1 signaux d'entrée $\rightarrow$ 2.M+1 signaux de sortie (P=2.L+1, Q=2.M+1). L et M sont des entiers naturels non nuls supérieurs ou égaux à 1.

Le procédé consiste ainsi à regrouper les signaux d'entrée par deux, l'un représentant la partie réelle, l'autre la partie imaginaire d'un vecteur d'entrée. Une fois dans l'espace des phases, le vecteur d'entrée subit un traitement par une brique de base référencée 1.

Le procédé permet de réduire considérablement le temps de calcul par rapport aux méthodes classiques non optimisées. Le tableau ci-dessous compare, en unité de temps FFT, les temps de calcul entre le procédé selon l'invention et le traitement classique non optimisé, et ce pour les différents modes de réalisation qui seront développés par la suite.

Par exemple, pour une spatialisation de 64 signaux d'entrée sur de la quadriphonie (L=32 et M=2), le procédé permet de diminuer le nombre de FFT de 320 à 34.

| Cas / Temps de calcul (en nombre de FFT) | Traitement classique | Traitement classique et stockage des filtres dans l'espace des phases | Moteur selon l'invention et stockage des filtres dans l'espace des phases |
|---|---|---|---|
| 1) P=2, Q=2 | 10 | 6 | 2 |
| 2) P=2.L, Q=2 | 10.L | 6.L | L+1 |
| 3) P=2.L, Q=2.M | 8.L.M | 4.L.M + 2.L | L+M |
| 4) P=2.L+1, Q=2.M+1 | 8.L.M + 6.L + 4.M + 3 | 8.L.M + 4.L + 2.M + 2 | L+M+2 |

Nous développons maintenant les divers modes de réalisation précités :

**Cas 1)** : 2 signaux d'entrée $\rightarrow$ 2 signaux de sortie (P=2, Q=2) :

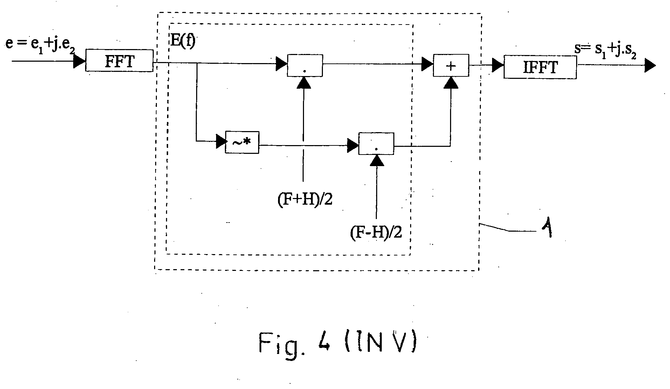

Ce cas est illustré au diagramme de la figure 4.

On définit les variables suivantes :

$e_1(t)$ et $e_2(t)$ sont lesdits P signaux d'entrée,
$s_1(t)$ et $s_2(t)$ sont lesdits Q signaux de sortie,
a(t), b(t), c(t) et d(t) sont des filtres définis tels que :

$$\begin{pmatrix} s_1(t) \\ s_2(t) \end{pmatrix} = \begin{pmatrix} a(t) & d(t) \\ b(t) & c(t) \end{pmatrix} \otimes \begin{pmatrix} e_1(t) \\ e_2(t) \end{pmatrix}$$

dans lequel $\otimes$ est l'opérateur de convolution.

e0(t) est ledit vecteur d'entrée tel que e0(t) = $e_1(t)$ + j.$e_2(t)$,

s0(t) est ledit vecteur de sortie tel que s0(t) = $s_1(t)$ + j.$s_2(t)$,

Ledit opérateur de filtrage, encore appelé « brique de base », référencé 1 à la figure 4 est tel que :

$$S = \frac{F+H}{2} \cdot E + \frac{F-H}{2} \cdot \widetilde{E}*$$

dans lequel :

\* est l'opérateur complexe conjugué tel que (x + j.y) \*=x - j.y,
$\sim$ est l'opérateur d'inversion des indices tel que $\widetilde{E}(i) = E(N\text{-}i)$ et $\widetilde{E}(0) = E(0)$

et

$$E(f) = FFT (e0(t)),$$

$$S(f) = FFT (s0(t)),$$

$$F(f) = FFT [ a(t) + j. b(t) ],$$

$$H(f) = FFT [c(t) - j. d(t)],$$

Le schéma de filtrage est illustré à la figure 4. Grâce à l'invention, le procédé ne nécessite que 3 FFT et une IFFT, ou seulement un FFT et une IFFT si les filtres $\dfrac{(F+H)}{2}$ et $\dfrac{(F-H)}{2}$ sont stockés dans l'espace des phases. Le temps de calcul est donc équivalent à 2 FFT.

**Cas 2)** : 2.L signaux d'entrée $\rightarrow$ 2 signaux de sortie (P=2.L, Q=2)

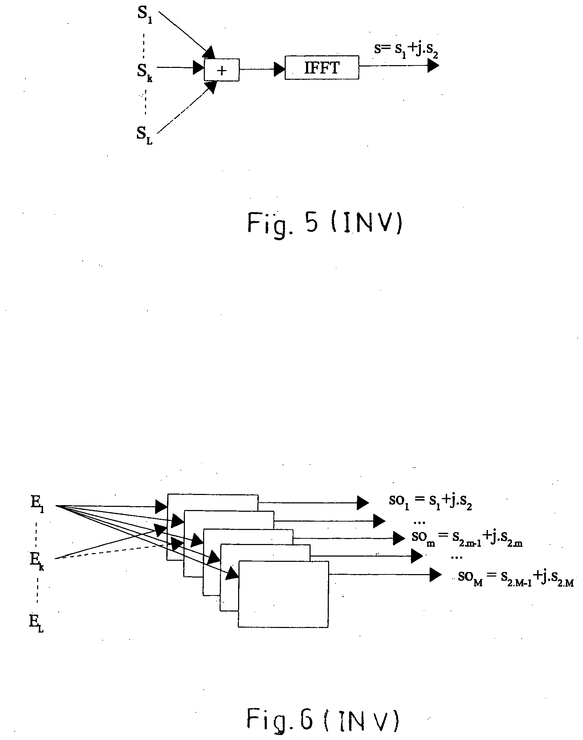

Ce mode de réalisation est particulièrement illustré aux figures 4 et 5.
P>2 entier pair tel que P=2L, avec L un entier,
Q=2,
**[0040]** On définit les variables suivantes :

$e_1(t),...,e_{2k-1}(t),e_{2k}(t),...e_{2L}(t)$, sont lesdits P signaux d'entrée,
$s_1(t),s_2(t)$, sont lesdits Q signaux de sortie,
$\{a_k(t), b_k(t), c_k(t), d_k(t)\}$ est l'ensemble des filtres définis tels que k e [1 à L] et :

$$\begin{pmatrix} s_1(t) \\ s_2(t) \end{pmatrix} = \sum_{k=1}^{L} \begin{pmatrix} a_k(t) & d_k(t) \\ b_k(t) & c_k(t) \end{pmatrix} \otimes \begin{pmatrix} e_{2k-1}(t) \\ e_{2k}(t) \end{pmatrix}$$

dans lequel $\otimes$ est l'opérateur de convolution.
$\{e0_k(t)\}$, tel que k e [1 à L] et $e0_k(t)= e_{2k-1}(t)+ j. e_{2k}(t)$, est l'ensemble des vecteurs d'entrée,
$s0(t)$ est ledit vecteur de sortie tel que $s0(t) = s_1(t) + j. s_2(t)$,

Ledit opérateur de filtrage associé audit vecteur source $e0_k(t)$ est tel que :

$$S_k = \frac{F_k + H_k}{2} \cdot E_k + \frac{F - H}{2} \cdot \widetilde{E}_k *$$

dans lequel :

\* est l'opérateur complexe conjugué,
$\sim$ est l'opérateur d'inversion des indices tel que défini précédemment,

et

$$E_k(f) = FFT (e0_k(t)),$$

$$\sum_{k=1}^{L} S_k(f) = FFT (s0(t)),$$

$$F_k(f) = FFT [ a_k(t) + j. b_k(t) ],$$

$$H_k(f) = FFT [c_k(t) - j. d_k(t) ]$$

En utilisant la brique de base référencée 1, il est possible d'économiser des IFFT en faisant la sommation des $S_k$ dans l'espace de Fourier (espace des phases). Une fois la sommation effectuée, une seule IFFT permet d'obtenir le résultat s1 et s2 (figure 5).
Ce procédé permet au final de ne nécessiter que L FFT et 1 IFFT. Le temps de calcul équivaut à L+1 FFT.

**Cas 3)** : 2.L signaux d'entrée → 2.M signaux de sortie (P=2.L, Q=2.M) :

Ce cas est illustré aux figures 4, 5 et 6.
P≥2 entier pair tel que P=2L, avec L un entier.
Q>2, entier pair tel que Q=2M, avec M un entier.
P peut être strictement supérieur à 2.
On définit les variables suivantes :

$e_1(t),...,e_{2k-1}(t),e_{2k}(t),...e_{2L}(t)$, sont lesdits P signaux d'entrée,
$s_1(t),...,s_{2m-1}(t),s_{2m}(t),...s_{2M}(t)$, sont lesdits Q signaux de sortie,
$\{a_{m,k}(t), b_{m,k}(t), c_{m,k}(t), d_{m,k}(t)\}$ est l'ensemble des filtres définis tels que $m \in [\,1 \text{ à } M]$ et k e [1 à L] et

$$\begin{pmatrix} s_{2m-1}(t) \\ s_{2m}(t) \end{pmatrix} = \sum_{k=1}^{L} \begin{pmatrix} a_{m,k}(t) & d_{m,k}(t) \\ b_{m,k}(t) & c_{m,k}(t) \end{pmatrix} \otimes \begin{pmatrix} e_{2k-1}(t) \\ e_{2k}(t) \end{pmatrix}$$

dans lequel ⊗ est l'opérateur de convolution,
$\{e0_k(t)\}$, tel que k e [1 à L] et $e0_k(t)= e_{2k-1}(t)+j.\, e_{2k}(t)$, est l'ensemble des vecteurs d'entrée,
$\{s0_m(t)\}$, tel que me [1 à M] et $s0_m(t) = s_{2m-1}(t) + j.\, s_{2m}(t)$, est l'ensemble des vecteurs de sortie,

Ledit opérateur de filtrage associé audit vecteur source $e0_k(t)$ et audit vecteur de sortie $s0_m(t)$ est tel que :

$$S_{m,k} = \frac{F_{m,k} + H_{m,k}}{2} \cdot E_k + \frac{F_{m,k} - H_{m,k}}{2} \cdot \widetilde{E}_k *$$

dans lequel :

* est l'opérateur complexe conjugué,
~ est l'opérateur d'inversion des indices tel que défini précédemment,

et

$$E_k(f) = FFT\,(e0_k(t))$$

$$\sum_{k=1}^{L} S_{m,k}(f) = FFT\,(s0_m(t))$$

$$F_{m,k}(f) = FFT\,[\,a_{m,k}(t) + j.\, b_{m,k}(t)\,]$$

$$H_{m,k}(f) = FFT\,[c_{m,k}(t) - j.\, d_{m,k}(t)\,]$$

Ce procédé revient à appliquer M fois le procédé mis en oeuvre au cas 2, tel qu'illustré à la figure 6.
En utilisant la brique de base référencé 1, ce procédé requiert L FFT pour chaque $E_k$ et M IFFT pour chaque $S0_k$ dans le cas où les filtres sont enregistrés sous forme fréquentielle. Le temps de calcul équivaut donc à (L+M) FFT.

**Cas 4:** 2.L+1 signaux d'entrée → 2.M+1 signaux de sortie (P=2.L+1, Q=2.M+1).

Ce cas est traité par le procédé vu au cas 3) en ajoutant un signal d'entrée nul et un signal de sortie nul. Le temps de calcul est donc équivalent à L+M+2.
La généralisation P signaux d'entrée, Q signaux de sortie consiste à ramener P et Q à l'entier pair supérieur ou égal en ajoutant un signal d'entrée nul et/ ou un signal de sortie nul, suivant le cas. Par exemple, lorsque P est un entier impair, on ajoute un signal d'entrée nul de telle façon à appliquer le procédé du cas 2 ou 3 sur un nombre de signaux d'entrée pair. De même lorsque Q est un entier impair, on ajoute un signal de sortie nul de telle façon à appliquer le procédé du cas 3 sur un nombre de signaux de sortie pair.

Bien entendu le procédé s'applique sur des signaux échantillonnés et fenêtrés. Les méthodes connues en soi « d'overlap-save » ou « d'overlap-add » peuvent être appliquées afin d'éviter les artefacts aux fenêtrages. Les méthodes de fondus enchaînées peuvent être appliquées afin d'éviter les artefacts lors de changement de filtre.

L'invention concernera également un processeur de signal numérique (DSP) possédant des bibliothèques de calcul de transformées de Fourier de l'espace des complexes vers l'espace des complexes et programmé pour la mise en oeuvre du procédé selon l'invention.

Naturellement, d'autres modes de réalisation auraient pu être envisagés par l'homme du métier sans pour autant sortir du cadre de l'invention définie par les revendications ci-après.

## Revendications

1. Procédé de traitement de signal audionumérique pour réaliser la spatialisation du son, ledit procédé étant mis en oeuvre par un processeur de signal numérique (DSP) possédant des bibliothèques de calcul de transformées de Fourier de l'espace des complexes vers l'espace des complexes, pour le traitement numérique de P signaux d'entrée, P étant un entier égal à 2, pour le filtrage desdits P signaux d'entrée par convolution de transformées de Fourier rapides (FFT) échantillonnées, obtenant ainsi Q signaux de sortie, Q étant un entier égal à 2, **caractérisé en ce que** le procédé comprend au moins les étapes suivantes :

   - regrouper lesdits P signaux d'entrée par deux, l'un représentant la partie réelle, l'autre la partie imaginaire d'un nombre complexe, définissant ainsi un vecteur d'entrée,
   - réaliser le filtrage sur ledit vecteur d'entrée en passant par l'espace de Fourier, engendrant ainsi un vecteur de sortie, complexe, la partie réelle et la partie imaginaire dudit vecteur de sortie représentant respectivement l'un desdits Q signaux de sortie

   et dans lequel ledit vecteur de sortie est obtenu de la manière suivante :

   - on applique un opérateur de filtrage sur ledit vecteur d'entrée donnant un résultat,
   - on fait subir au résultat de l'étape précédente une transformée de Fourier rapide inverse, obtenant ainsi ledit vecteur de sortie, et dans lequel :
   - P=Q=2,
   - $e_1(t)$ et $e_2(t)$ sont lesdits P signaux d'entrée,
   - $s_1(t)$ et $s_2(t)$ sont lesdits Q signaux de sortie,
   - $a(t)$, $b(t)$, $c(t)$ et $d(t)$ sont des filtres définis tels que :

$$\begin{pmatrix} s_1(t) \\ s_2(t) \end{pmatrix} = \begin{pmatrix} a(t) & d(t) \\ b(t) & c(t) \end{pmatrix} \otimes \begin{pmatrix} e_1(t) \\ e_2(t) \end{pmatrix}$$

   dans lesquels $\otimes$ est l'opérateur de convolution,
   - $e0(t)$ est ledit vecteur d'entrée tel que $e0(t) = e_1(t) + j.e_2(t)$,
   - $s0(t)$ est ledit vecteur de sortie tel que $s0(t) = s_1(t) + j.s_2(t)$,
   - ledit opérateur de filtrage est tel que :

$$S = \frac{F+H}{2} \cdot E + \frac{F-H}{2} \cdot \widetilde{E}^*$$

   dans lequel :

   $*$ est l'opérateur complexe conjugué,
   $\sim$ est l'opérateur d'inversion des indices

   et

$$E(f) = FFT \ (e0 \ (t)),$$

$$S(f) = FFT \ (s0(t)),$$

$$F(f) = FFT \ [a(t) + j.b(t)],$$

$$H(f) = FFT \ [c(t) - j.d(t) \ ],$$

dans lequel FFT désigne l'opérateur de la transformée de Fourier rapide.

2. Procédé de traitement de signal audionumérique pour réaliser la spatialisation du son, ledit procédé étant mis en oeuvre par un processeur de signal numérique (DSP) possédant des bibliothèques de calcul de transformées de Fourier de l'espace des complexes vers l'espace des complexes, pour le traitement numérique de P signaux d'entrée, P étant un entier pair supérieur à 2, pour le filtrage desdits P signaux d'entrée par convolution de transformées de Fourier rapides (FFT) échantillonnées, obtenant ainsi Q signaux de sortie, Q étant un entier égal à 2, **caractérisé en ce que** le procédé comprend au moins les étapes suivantes:

- regrouper lesdits P signaux d'entrée par deux, l'un représentant la partie réelle, l'autre la partie imaginaire d'un nombre complexe, définissant ainsi plusieurs vecteurs d'entrée,
- réaliser le filtrage sur lesdits vecteurs d'entrée en passant par l'espace de Fourier, engendrant ainsi un vecteur de sortie, complexe, la partie réelle et la partie imaginaire dudit vecteur de sortie représentant respectivement l'un desdits Q signaux de sortie,

et dans lequel ledit vecteur de sortie est obtenu de la manière suivante :

- on applique un opérateur de filtrage sur chacun desdits vecteurs d'entrée, donnant ainsi plusieurs résultats intermédiaires,
- on somme lesdits résultats intermédiaires obtenus à l'étape précédente dans l'espace de Fourier,
- on fait subir au résultat de l'étape précédente une transformée de Fourier rapide inverse, obtenant ainsi ledit vecteur de sortie,

et dans lequel:

- P>2 entier pair tel que P=2L, avec L un entier,
- Q=2,
- $e_1(t),...,e_{2k-1}(t), e_{2k}(t),...,e_{2L}(t)$, sont lesdits P signaux d'entrée,
- $s_1(t), s_2(t)$, sont lesdits Q signaux de sortie,
- $\{a_k(t), b_k(t), c_k(t), d_k(t)\}$ est l'ensemble des filtres définis tels que $k \in [1 \ à \ L]$ et :

$$\begin{pmatrix} s_1(t) \\ s_2(t) \end{pmatrix} = \sum_{k=1}^{L} \begin{pmatrix} a_k(t) & d_k(t) \\ b_k(t) & c_k(t) \end{pmatrix} \otimes \begin{pmatrix} e_{2k-1}(t) \\ e_{2k}(t) \end{pmatrix}$$

dans lesquels $\otimes$ est l'opérateur de convolution,
- $\{e0_k(t)\}$, tel que $k \in [1 \ à \ L]$ et $e0_k(t)= e_{2k-1}(t)+ j.e_{2k}(t)$, est l'ensemble des vecteurs d'entrée,
- s0(t) est ledit vecteur de sortie tel que $s0(t) = s_1(t) + j. \ s_2(t)$,
- ledit opérateur de filtrage associé audit vecteur d'entrée $e0_k(t)$ est tel que :

$$S_k = \frac{F_k + H_k}{2} \cdot E_k + \frac{F_k - H_k}{2} \cdot \widetilde{E}_k^*$$

dans lequel :

∗ est l'opérateur complexe conjugué,

~ est l'opérateur d'inversion des indices

et

$$E_k(f) = FFT\ (e0_k(t)),$$

$$\sum_{k=1}^{L} S_k(f) = FFT\left(s0(t)\right)$$

$$F_k(f) = FFT[a_k(t) + j.b_k(t)],$$

$$H_k(f) = FFT\ [c_k(t) - j.d_k(t)],$$

dans lequel FFT désigne l'opérateur de la transformée de Fourier rapide.

3.  Procédé de traitement de signal audionumérique pour réaliser la spatialisation du son, ledit procédé étant mis en oeuvre par un processeur de signal numérique (DSP) possédant des bibliothèques de calcul de transformées de Fourier de l'espace des complexes vers l'espace des complexes, pour le traitement numérique de P signaux d'entrée, P étant un entier pair supérieur à 2, pour le filtrage desdits P signaux d'entrée par convolution de transformées de Fourier rapides (FFT) échantillonnées, obtenant ainsi Q signaux de sortie, Q étant un entier pair supérieur à 2, **caractérisé en ce que** le procédé comprend au moins les étapes suivantes:

- regrouper lesdits P signaux d'entrée par deux, l'un représentant la partie réelle, l'autre la partie imaginaire d'un nombre complexe, définissant ainsi plusieurs vecteurs d'entrée,
- réaliser le filtrage sur lesdits vecteurs d'entrée en passant par l'espace de Fourier, engendrant ainsi plusieurs vecteurs de sortie, complexes, la partie réelle et la partie imaginaire de chacun desdits vecteurs de sortie représentant respectivement l'un desdits Q signaux de sortie,

et dans lequel chacun desdits vecteurs de sortie est obtenu de la manière suivante :

- on applique un opérateur de filtrage sur chacun desdits vecteurs d'entrée, donnant ainsi plusieurs résultats intermédiaires,
- on somme lesdits résultats intermédiaires obtenus à l'étape précédente dans l'espace de Fourier,
- on fait subir au résultat de l'étape précédente une transformée de Fourier rapide inverse, obtenant ainsi ledit vecteur de sortie,

et dans lequel:

- P>2 entier pair tel que P=2L, avec L un entier,
- Q>2, entier pair tel que Q=2M, avec M un entier
- $e_1(t),...,e_{2k-1}(t), e_{2k}(t),...e_{2L}(t)$, sont lesdits P signaux d'entrée,
- $s_1(t),..., s_{2m-1}(t), s_{2m}(t),...S_{2M}(t)$, sont lesdits Q signaux de sortie,
- $\{a_{m,k}(t), b_{m,k}(t), c_{m,k}(t), d_{m,k}(t)\}$ est l'ensemble des filtres définis tels que $m \in [1\ à\ M]$ et $k \in [1\ à\ L]$ et

$$\begin{pmatrix} s_{2m-1}(t) \\ s_{2m}(t) \end{pmatrix} = \sum_{k=1}^{L} \begin{pmatrix} a_{m,k}(t) & d_{m,k}(t) \\ b_{m,k}(t) & c_{m,k}(t) \end{pmatrix} \otimes \begin{pmatrix} e_{2k-1}(t) \\ e_{2k}(t) \end{pmatrix}$$

dans lequel ⊗ est l'opérateur de convolution,
- $\{e0_k(t)\}$, tel que $k \in [1\ à\ L]$ et $e0_k(t) = e_{2k-1}(t) + j.e_{2k}(t)$, est l'ensemble des vecteurs d'entrée,
- $\{s0_m(t)\}$, tel que $m \in [1\ à\ M]$ et $s0_m(t) = s_{2m-1}(t) + j.s_{2m}(t)$, est l'ensemble des vecteurs de sortie,

- ledit opérateur de filtrage associé audit vecteur d'entrée $e0_k(t)$ et audit vecteur de sortie $s0_m(t)$ est tel que :

$$S_{m,k} = \frac{F_{m,k} + H_{m,k}}{2} \cdot E_k + \frac{F_{m,k} - H_{m,k}}{2} \cdot \widetilde{E}_k^*$$

dans lequel :

* est l'opérateur complexe conjugué,
~ est l'opérateur d'inversion des indices

et

$$E_k(f) = FFT\,(e0_k(t)),$$

$$\sum_{k=1}^{L} S_{m,k}(f) = FFT\,\big(s0_m(t)\big)$$

$$F_{m,k}(f) = FFT[a_{m,k}(t) + j.b_{m,k}(t)],$$

$$H_{m,k}(f) = FFT\,[c_{m,k}(t) - j.d_{m,k}(t)],$$

dans lequel FFT désigne l'opérateur de la transformée de Fourier rapide.

4. Procédé de traitement de signal audionumérique pour réaliser la spatialisation du son, ledit procédé étant mis en oeuvre par un processeur de signal numérique (DSP) possédant des bibliothèques de calcul de transformées de Fourier de l'espace des complexes vers l'espace des complexes, pour le traitement numérique de P signaux d'entrée, P étant un entier supérieur à 2, pour le filtrage desdits P signaux d'entrée par convolution de transformées de Fourier rapides (FFT) échantillonnées, obtenant ainsi Q signaux de sortie, Q étant un entier supérieur ou égal à 2, **caractérisé en ce que** dans ce procédé :

- lorsque P est un entier impair et Q est égal à 2, on ajoute un signal d'entrée nul et on applique le procédé selon la revendication 2 sur le nombre de signaux d'entrée pair et sur les Q signaux de sortie,
- lorsque P est un entier pair et Q est un entier impair, on ajoute un signal de sortie nul et on applique le procédé selon la revendication 3 sur les P signaux d'entrée et sur le nombre de signaux de sortie pair, et
- lorsque P et Q sont des entiers impairs, on ajoute un signal d'entrée nul et un signal de sortie nul et on applique le procédé objet de la revendication 3 sur le nombre de signaux d'entrée pair et le nombre de signaux de sortie pair.

5. Procédé selon l'une des revendications 1 à 4, dans lequel on applique le procédé sur des signaux échantillonnés et fenêtres, en appliquant les méthodes "d'overlap - save" ou "overlap - add" afin d'éviter les artefacts aux fenêtrages.

6. Procédé selon l'une des revendications 1 à 5, dans lequel on applique les méthodes de fondus enchaînées afin d'éviter les artefacts lors de changement de filtre.

7. Processeur de signal numérique (DSP) possédant des bibliothèques de calcul de transformées de Fourier de l'espace des complexes vers l'espace des complexes et programmé pour la mise en oeuvre du procédé selon l'une des revendications 1 à 6.

**Patentansprüche**

1. Verfahren zur Verarbeitung eines digitalen Audiosignals, um die räumliche Verteilung des Schalls auszuführen, wobei das Verfahren von einem digitalen Signalprozessor (DSP) umgesetzt wird, der Bibliotheken zur Berechnung von Fourier-Transformationen vom Raum der komplexen Zahlen in den Raum der komplexen Zahlen besitzt, zur digitalen Verarbeitung von P Eingangssignalen, wobei P eine ganze Zahl gleich 2 ist, zur Filterung der P Eingangssignale durch Faltung von abgetasteten schnellen Fourier-Transformationen (FFT), wodurch so Q Ausgangssignale erhalten werden, wobei Q eine ganze Zahl gleich 2 ist,
**dadurch gekennzeichnet, dass** das Verfahren mindestens die folgenden Schritte umfasst:

- zweierweises Gruppieren der P Eingangssignale, wobei das eine den Realteil, das andere den Imaginärteil einer komplexen Zahl darstellt, wodurch so ein Eingangsvektor definiert wird,
- Ausführen der Filterung am Eingangsvektor unter Durchlaufen des Fourier-Raums, wodurch so ein komplexer Ausgangsvektor erzeugt wird, wobei der Realteil und der Imaginärteil des Ausgangsvektors jeweils eines der Q Ausgangssignale darstellen,

und wobei der Ausgangsvektor auf die folgende Weise erhalten wird:

- auf den Eingangsvektor wird ein Filteroperator angewendet, wodurch sich ein Ergebnis ergibt,
- das Ergebnis aus dem vorhergehenden Schritt wird einer inversen schnellen Fourier-Transformation unterzogen, wodurch so der Ausgangsvektor erhalten wird, und wobei:
- $P = Q = 2$,
- $e_1(t)$ und $e_2(t)$ die P Eingangssignale sind,
- $s_1(t)$ und $s_2(t)$ die Q Ausgangssignale sind,
- $a(t)$, $b(t)$, $c(t)$ und $d(t)$ Filter sind, die derart definiert sind, dass:

$$\begin{pmatrix} s_1(t) \\ s_2(t) \end{pmatrix} = \begin{pmatrix} a(t) & d(t) \\ b(t) & c(t) \end{pmatrix} \otimes \begin{pmatrix} e_1(t) \\ e_2(t) \end{pmatrix}$$

wobei $\otimes$ der Faltungsoperator ist,
- $e0(t)$ der Eingangsvektor ist, derart, dass $e0(t) = e_1(t) + j.e_2(t)$,
- $s0(t)$ der Ausgangsvektor ist, derart, dass $s0(t) = s_1(t) + j.s_2(t)$,
- der Filteroperator derart ist, dass:

$$S = \frac{F + H}{2} \cdot E + \frac{F - H}{2} \cdot \widetilde{E}^*$$

wobei:

* der konjugiert komplexe Operator ist,
~ der Operator zur Inversion der Indizes ist,

und

```
E(f) = FFT (e0 (t)),

S(f) = FFT (s0(t)),

F(f) = FFT [a(t) + j.b(t)],

H(f) = FFT [c(t) - j.d(t)],
```

wobei FFT den Operator der schnellen Fourier-Transformation bezeichnet.

2. Verfahren zur Verarbeitung eines digitalen Audiosignals, um die räumliche Verteilung des Schalls auszuführen, wobei das Verfahren von einem digitalen Signalprozessor (DSP) umgesetzt wird, der Bibliotheken zur Berechnung von Fourier-Transformationen vom Raum der komplexen Zahlen in den Raum der komplexen Zahlen besitzt zur digitalen Verarbeitung von P Eingangssignalen, wobei P eine gerade ganze Zahl größer als 2 ist, zur Filterung der P Eingangssignale durch Faltung von abgetasteten schnellen Fourier-Transformationen (FFT), wodurch so Q Ausgangssignale erhalten werden, wobei Q eine ganze Zahl gleich 2 ist, **dadurch gekennzeichnet, dass** das Verfahren mindestens die folgenden Schritte umfasst:

- zweierweises Gruppieren der P Eingangssignale, wobei das eine den Realteil, das andere den Imaginärteil einer komplexen Zahl darstellt, wodurch so mehrere Eingangsvektoren definiert werden,
- Ausführen der Filterung an den Eingangsvektoren unter Durchlaufen des Fourier-Raums, wodurch so ein komplexer Ausgangsvektor erzeugt wird, wobei der Realteil und der Imaginärteil des Ausgangsvektors jeweils eines der Q Ausgangssignale darstellen,

und wobei der Ausgangsvektor auf die folgende Weise erhalten wird:

- auf jeden der Eingangsvektoren wird ein Filteroperator angewendet, wodurch sich so mehrere Zwischenergebnisse ergeben,
- die im vorhergehenden Schritt erhaltenen Zwischenergebnisse werden im Fourier-Raum summiert,
- das Ergebnis aus dem vorhergehenden Schritt wird einer inversen schnellen Fourier-Transformation unterzogen, wodurch so der Ausgangsvektor erhalten wird,

und wobei:

- P eine gerade ganze Zahl >2 ist, derart, dass P = 2L, wobei L eine ganze Zahl ist,
- Q = 2,
- $e_1(t)$, ..., $e_{2k-1}(t)$, $e_{2k}(t)$, ..., $e_{2L}(t)$ die P Eingangssignale sind,
- $s_1(t)$, $s_2(t)$ die Q Ausgangssignale sind,
- $\{a_k(t), b_k(t), c_k(t), d_k(t)\}$ der Satz der Filter ist, die derart definiert sind, dass $k \in [1 \text{ bis } L]$ und:

$$\begin{pmatrix} s_1(t) \\ s_2(t) \end{pmatrix} = \sum_{k=1}^{L} \begin{pmatrix} a_k(t) & d_k(t) \\ b_k(t) & c_k(t) \end{pmatrix} \otimes \begin{pmatrix} e_{2k-1}(t) \\ e_{2k}(t) \end{pmatrix}$$

wobei $\otimes$ der Faltungsoperator ist,
- $\{e0_k(t)\}$, derart, dass $k \in [1 \text{ bis } L]$ und $e0_k(t) = e_{2k-1}(t) + j.e_{2k}(t)$, der Satz der Eingangsvektoren ist,
- $s0(t)$ der Ausgangsvektor ist, derart, dass $s0(t) = s_1(t) + j.s_2(t)$,
- der mit dem Eingangsvektor $e0_k(t)$ assoziierte Filteroperator derart ist, dass:

$$S_k = \frac{F_k + H_k}{2} \cdot E_k + \frac{F_k - H_k}{2} \cdot \widetilde{E}_k^*$$

wobei:

$*$ der konjugiert komplexe Operator ist,
$\sim$ der Operator zur Inversion der Indizes ist,

und

$$E_k(f) = FFT(e0_k(t)),$$

$$\sum_{k=1}^{L} S_k(f) = FFT(s0(t))$$

$$F_k(f) = FFT[a_k(t) + j.b_k(t)],$$

$$H_k(f) = FFT[c_k(t) - j.d_k(t)],$$

wobei FFT den Operator der schnellen Fourier-Transformation bezeichnet.

3. Verfahren zur Verarbeitung eines digitalen Audiosignals, um die räumliche Verteilung des Schalls auszuführen, wobei das Verfahren von einem digitalen Signalprozessor (DSP) umgesetzt wird, der Bibliotheken zur Berechnung von Fourier-Transformationen vom Raum der komplexen Zahlen in den Raum der komplexen Zahlen besitzt, zur digitalen Verarbeitung von P Eingangssignalen, wobei P eine gerade ganze Zahl größer als 2 ist, zur Filterung der P Eingangssignale durch Faltung von abgetasteten schnellen Fourier-Transformationen (FFT), wodurch so Q Ausgangssignale erhalten werden, wobei Q eine gerade ganze Zahl größer als 2 ist, **dadurch gekennzeichnet, dass** das Verfahren mindestens die folgenden Schritte umfasst:

- zweierweises Gruppieren der P Eingangssignale, wobei das eine den Realteil, das andere den Imaginärteil einer komplexen Zahl darstellt, wodurch so mehrere Eingangsvektoren definiert werden,
- Ausführen der Filterung an den Eingangsvektoren unter Durchlaufen des Fourier-Raums, wodurch so mehrere komplexe Ausgangsvektoren erzeugt werden, wobei der Realteil und der Imaginärteil jedes der Ausgangsvektoren jeweils eines der Q Ausgangssignale darstellen,

und wobei jeder der Ausgangsvektoren auf die folgende Weise erhalten wird:

- auf jeden der Eingangsvektoren wird ein Filteroperator angewendet, wodurch sich so mehrere Zwischenergebnisse ergeben,
- die im vorhergehenden Schritt erhaltenen Zwischenergebnisse werden im Fourier-Raum summiert,
- das Ergebnis aus dem vorhergehenden Schritt wird einer inversen schnellen Fourier-Transformation unterzogen, wodurch so der Ausgangsvektor erhalten wird,

und wobei:

- P eine gerade ganze Zahl >2 ist, derart, dass P = 2L, wobei L eine ganze Zahl ist,
- Q eine gerade ganze Zahl >2 ist, derart, dass Q = 2M, wobei M eine ganze Zahl ist,
- $e_1(t)$, ..., $e_{2k-1}(t)$, $e_{2k}(t)$, ..., $e_{2L}(t)$ die P Eingangssignale sind,
- $s_1(t)$, ..., $s_{2m-1}(t)$, $s_{2m}(t)$, ..., $S_{2M}(t)$ die Q Ausgangssignale sind,
- $\{a_{m,k}(t), b_{m,k}(t), c_{m,k}(t), d_{m,k}(t)\}$ der Satz der Filter ist, die derart definiert sind, dass $m \in [1$ bis $M]$ und $k \in [1$ bis $L]$ und

$$\begin{pmatrix} s_{2m-1}(t) \\ s_{2m}(t) \end{pmatrix} = \sum_{k=1}^{L} \begin{pmatrix} a_{m,k}(t) & d_{m,k}(t) \\ b_{m,k}(t) & c_{m,k}(t) \end{pmatrix} \otimes \begin{pmatrix} e_{2k-1}(t) \\ e_{2k}(t) \end{pmatrix}$$

wobei $\otimes$ der Faltungsoperator ist,
- $\{e0_k(t)\}$, derart, dass $k \in [1$ bis $L]$ und $e0_k(t) = e_{2k-1}(t) + j.e_{2k}(t)$, der Satz der Eingangsvektoren ist,
- $\{s0_m(t)\}$, derart, dass $m \in [1$ bis $M]$ und $s0_m(t) = s_{2m-1}(t) + j.s_{2m}(t)$, der Satz der Ausgangsvektoren ist,
- der mit dem Eingangsvektor $e0_k(t)$ und mit dem Ausgangsvektor $s0_m(t)$ assoziierte Filteroperator derart ist, dass:

$$S_{m,k} = \frac{F_{m,k} + H_{m,k}}{2} \cdot E_k + \frac{F_{m,k} - H_{m,k}}{2} \cdot \widetilde{E}_k^*$$

wobei:

∗ der konjugiert komplexe Operator ist,
~ der Operator zur Inversion der Indizes ist,

und

$$E_k(f) = FFT (e0_k(t)),$$

$$\sum_{k=1}^{L} S_{m,k}(f) = FFT \left(s0_m(t)\right)$$

$$F_{m,k}(f) = FFT[a_{m,k}(t) + j.b_{m,k}(t)],$$

$$H_{m,k}(f) = FFT [c_{m,k}(t) - j.d_{m,k}(t)],$$

wobei FFT den Operator der schnellen Fourier-Transformation bezeichnet.

4. Verfahren zur Verarbeitung eines digitalen Audiosignals, um die räumliche Verteilung des Schalls auszuführen, wobei das Verfahren von einem digitalen Signalprozessor (DSP) umgesetzt wird, der Bibliotheken zur Berechnung von Fourier-Transformationen vom Raum der komplexen Zahlen in den Raum der komplexen Zahlen besitzt, zur digitalen Verarbeitung von P Eingangssignalen, wobei P eine ganze Zahl größer als 2 ist, zur Filterung der P Eingangssignale durch Faltung von abgetasteten schnellen Fourier-Transformationen (FFT), wodurch so Q Ausgangssignale erhalten werden, wobei Q eine ganze Zahl größer oder gleich 2 ist, **dadurch gekennzeichnet, dass** in diesem Verfahren:

- wenn P eine ungerade ganze Zahl ist und Q gleich 2 ist, ein Eingangssignal von Null hinzugefügt und das Verfahren nach Anspruch 2 auf die gerade Anzahl von Eingangssignalen und auf die Q Ausgangssignale angewendet wird,
- wenn P eine gerade ganze Zahl ist und Q eine ungerade ganze Zahl ist, ein Ausgangssignal von Null hinzugefügt und das Verfahren nach Anspruch 3 auf die P Eingangssignale und auf die gerade Anzahl von Ausgangssignalen angewendet wird, und
- wenn P und Q ungerade ganze Zahlen sind, ein Eingangssignal von Null und Ausgangssignal von Null hinzugefügt werden und das Verfahren, das Gegenstand von Anspruch 3 ist, auf die gerade Anzahl von Eingangssignalen und die gerade Anzahl von Ausgangssignalen angewendet wird.

5. Verfahren nach einem der Ansprüche 1 bis 4, wobei das Verfahren unter Anwendung der "Overlap - Save"- oder "Overlap - Add"-Methoden auf abgetastete Signale und Fenster angewendet wird, um die Artefakte bei den Fensterungen zu vermeiden.

6. Verfahren nach einem der Ansprüche 1 bis 5, wobei die Überblendmethoden angewendet werden, um die Artefakte bei Filterwechsel zu vermeiden.

7. Digitaler Signalprozessor (DSP), der Bibliotheken zur Berechnung von Fourier-Transformationen vom Raum der komplexen Zahlen in den Raum der komplexen Zahlen besitzt und für die Umsetzung des Verfahrens nach einem der Ansprüche 1 bis 6 programmiert ist.

## Claims

1. Method for processing a digital audio signal for achieving spatialization of sound, said method being applied by a digital signal processor (DSP) having libraries for calculating Fourier transforms from complex number space to complex number space, for digital processing of P input signals, P being an integer greater than or equal to 2, for filtering said P input signals by the convolution of sampled fast Fourier transforms (FFT), thereby obtaining Q output signals, Q being an integer equal to 2, **characterized in that** the method comprises at least the following steps:

- grouping said P input signals by twos, one representing the real part, the other the imaginary part of a complex number, thereby defining an input vector,
- achieving filtering on said input vector by passing through the Fourier space, thereby generating a complex output vector, the real portion and the imaginary portion of said output vector representing one of said Q output signals respectively and in which said output signal is obtained in the following way:

- a filtering operator is applied on said input vector giving a result,
- the result of the preceding step is subject to an inverse fast Fourier transform, thereby obtaining said output vector, and wherein:

- P = Q = 2,
- $e_1(t)$ and $e_2(t)$ are said input P input signals,
- $s_1(t)$ and $s_2(t)$ are said Q output signals,
- a(t), b(t), c(t) and d(t) are filters defined such that:

$$\begin{pmatrix} s_1(t) \\ s_2(t) \end{pmatrix} = \begin{pmatrix} a(t) & d(t) \\ b(t) & c(t) \end{pmatrix} \otimes \begin{pmatrix} e_1(t) \\ e_2(t) \end{pmatrix}$$

wherein $\otimes$ is the convolution operator,
- e0(t) is said input vector such that $e0(t) = e_1(t) + j.e_2(t)$,
- s0(t) is said output vector such that $s0(t) = s_1(t) + j.s_2(t)$,
- said filtering operator is such that:

$$S = \frac{F+H}{2} \cdot E + \frac{F-H}{2} \cdot \widetilde{E} *$$

wherein:

* is the conjugate complex operator,
$\sim$ is the operator for inverting indices

and

$$E(f) = FFT(e0(t)),$$

$$S(f) = FFT(s0(t)),$$

$$F(f) = FFT[a(t) + j.b(t)],$$

$$H(f) = FFT[c(t) - j.d(t)],$$

wherein FFT designates the fast Fourier transform operator.

2. Method for processing a digital audio signal for achieving spatialization of sound, said method being applied by a digital signal processor (DSP) having libraries for calculating Fourier transforms from complex number space to complex number space, for digital processing of P input signals, P being an even integer greater than 2, for filtering said P input signals by the convolution of sampled fast Fourier transforms (FFT), thereby obtaining Q output signals, Q being an integer equal to 2, **characterized in that** the method comprises at least the following steps:

- grouping said P input signals by twos, one representing the real part, the other the imaginary part of a complex number, thereby defining several input vectors,
- achieving filtering on said input vectors by passing through the Fourier space, thereby generating a complex output vector, the real portion and the imaginary portion of said output vector representing one of said Q output signals respectively,

and in which said output signal is obtained in the following way:

- a filtering operator is applied on each one of said input vectors, thus giving several intermediate results,
- said intermediate results obtained in the preceding step are summed in the Fourier space,
- the result of the preceding step is subject to an inverse fast Fourier transform, thereby obtaining said output vector,

and wherein:

- P>2, an even integer such that P=2L, with L an integer,
- Q=2,
- $e_1(t)$ ,..., $e_{2k-1}(t)$, $e_{2k}(t)$,..., $e_{2L}(t)$, are said P input signals,
- $s_1(t)$, $s_2(t)$ are said Q output signals,
- $\{a_k(t), b_k(t), c_k(t), d_k(t)\}$ is the set of filters defined such that $k \in$ [1 to L] and:

$$\begin{pmatrix} s_1(t) \\ s_2(t) \end{pmatrix} = \sum_{k=1}^{L} \begin{pmatrix} a_k(t) & d_k(t) \\ b_k(t) & c_k(t) \end{pmatrix} \otimes \begin{pmatrix} e_{2k-1}(t) \\ e_{2k}(t) \end{pmatrix}$$

wherein $\otimes$ is the convolution operator.
- $\{e0_k(t)\}$, such that $k \in$ [1 to L] and $e0_k(t) = e_{2k-1}(t) + j.e_2k(t)$, is the set of input vectors,
- s0(t) is said output vector such that $s0(t) = s_1(t) + j.s_2(t)$,
- said filtering operator associated with said source vector $e0_k(t)$ is such that:

$$S_k = \frac{F_k + H_k}{2} \cdot E_k + \frac{F - H}{2} \cdot \widetilde{E}_k *$$

wherein:

* is the conjugate complex operator,
~ is the operator for inverting indices,

and

$$E_k(f) = FFT(e0_k(t)),$$

$$\sum_{k=1}^{L} S_k(f) = FFT(s0(t)),$$

$$F_k(f) = FFT[a_k(t) + j.b_k(t)],$$

$$H_k(f) = FFT[c_k(t) - j.d_k(t)]$$

wherein FFT designates the fast Fourier transform operator.

3. Method for processing a digital audio signal for achieving spatialization of sound, said method being applied by a digital signal processor (DSP) having libraries for calculating Fourier transforms from complex number space to complex number space, for digital processing of P input signals, P being an even integer greater than 2, for filtering said P input signals by the convolution of sampled fast Fourier transforms (FFT), thereby obtaining Q output signals, Q being an even integer greater than 2, **characterized in that** the method comprises at least the following steps:

- grouping said P input signals by twos, one representing the real part, the other the imaginary part of a complex number, thereby defining several input vectors,
- achieving filtering on said input vectors by passing through the Fourier space, thereby generating several complex output vectors, the real portion and the imaginary portion of each one of said output vectors representing one of said Q output signals respectively, and in which each one of said output signals is obtained in the following way:

- a filtering operator is applied on each one of said input vectors, thus giving several intermediate results,
- said intermediate results obtained in the preceding step are summed in the Fourier space,
- the result of the preceding step is subject to an inverse fast Fourier transform, thereby obtaining said output vector,

and wherein:

- $P>2$, an even integer such that $P=2L$, with L an integer,
- $Q>2$, an even integer such that $Q=2M$, with M an integer,
- $e_1(t),..., e_{2k-1}(t), e_{2k}(t),..., e_{2L}(t)$, are said P input signals,
- $s_1(t),..., s_{2m-1}(t), s_{2m}(t),..., s_{2M}(t)$ are said Q output signals,
- $\{a_{m,k}(t), b_{m,k}(t), c_{m,k}(t), d_{m,k}(t)\}$ is the set of filters defined such as $m \in [1$ to $M]$ and $k \in [1$ to $L]$ and

$$\begin{pmatrix} s_{2m-1}(t) \\ s_{2m}(t) \end{pmatrix} = \sum_{k=1}^{L} \begin{pmatrix} a_{m,k}(t) & d_{m,k}(t) \\ b_{m,k}(t) & c_{m,k}(t) \end{pmatrix} \otimes \begin{pmatrix} e_{2k-1}(t) \\ e_{2k}(t) \end{pmatrix}$$

wherein $\otimes$ is the convolution operator,
- $\{e0_k(t)\}$, such that $k \in [1$ to $L]$ and $e0_k(t) = e_{2k-1}(t) + j.e_{2k}(t)$, is the set of input vectors,
- $\{s0_m(t)\}$, such that $m \in [1$ to $M]$ and $s0_m(t) = s_{2m-1}(t) + j.s_{2m}(t)$, is the set of output vectors,
- said filtering operator associated with said source vector $e0_k(t)$ and with said output vector $s0_m(t)$ is such that:

$$S_{m,k} = \frac{F_{m,k} + H_{m,k}}{2} \cdot E_k + \frac{F_{m,k} - H_{m,k}}{2} \cdot \widetilde{E}_k \, *$$

wherein:

* is the conjugate complex operator,
~ is the operator for inverting indices,

and

$$E_k(f) = FFT(e0_k(t)),$$

$$\sum_{k=1}^{L} S_{m,k}(f) = FFT(s0_m(t)),$$

$$F_{m,k}(f) = FFT[a_{m,k}(t) + j.b_{m,k}(t)],$$

$$H_{m,k}(f) = FFT[c_{m,k}(t) - j.d_{m,k}(t)],$$

wherein FFT designates the fast Fourier transform operator.

4. Method for processing a digital audio signal for achieving spatialization of sound, said method being applied by a digital signal processor (DSP) having libraries for calculating Fourier transforms from complex number space to complex number space, for digital processing of P input signals, P being an integer greater than 2, for filtering said P input signals by the convolution of sampled fast Fourier transforms (FFT), thereby obtaining Q output signals, Q being an integer greater than or equal to 2, **characterized in that** in this method:

- when P is an uneven integer and Q is equal to 2, a zero input signal is added so as to apply the method object of claim 2 on an even number of input signals and on the Q output signals,
- when P is an even integer and Q is an uneven integer, a zero output signal is added so as to apply the method object of claim 3 on the P input signals and on the uneven number of output signals, and
- when P and Q are uneven integers, a zero input signal and a zero output signal are added so as to apply the method object of claim 3 on an even number of input signals and the even number of output signals.

5. Method according to one of claims 1 to 4, wherein the method is applied on sampled and windowed signals, by applying the "overlap-save" or "overlap-add" methods in order to avoid artefacts on windowings.

6. Method according to one of claims 1 to 5, wherein cross-fade methods are applied for avoiding artefacts upon changing filter.

7. Digital signal processor (DSP) having libraries for calculating Fourier transforms from complex number space to complex number space and programmed for applying the method according to one of claims 1 to 6.

Fig. 1 (ET)

Fig. 2 (ET)

Fig. 3 (E.T)

$e = e_1 + j.e_2$

FFT

E(f)

∙

~*

(F+H)/2

∙

(F-H)/2

+

IFFT

$s = s_1 + j.s_2$

1

Fig. 4 (INV)

$S_1$

$S_k$

$+$

IFFT

$s = s_1 + j.s_2$

$S_L$

Fig. 5 (INV)

$E_1$

$E_k$

$E_L$

$so_1 = s_1 + j.s_2$

...

$so_m = s_{2.m-1} + j.s_{2.m}$

...

$so_M = s_{2.M-1} + j.s_{2.M}$

Fig. 6 (INV)

23

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 0133411 A
- US 20020083107 A
- US 20060140291 A

### Littérature non-brevet citée dans la description

- **J.J. LOPEZ.** PC based real-time multichannel convolver for ambiophonic reproduction. *AES 19th International Conference on Surround Sound,* 21 Juin 2001
- **E.O. BRIGHAM.** The Fast Fourier Transform and its Applications. Prentice-Hall Inc, 1988